# EUROPEAN PATENT SPECIFICATION

(11) **EP 1 893 446 B1**
(45) Date of publication and mention of the grant of the patent: **16.05.2012**
(21) Application number: 06747822.2
(22) Date of filing: 30.05.2006
(51) Int. Cl.: B60R 9/045, B60R 9/058

(54) **LOAD CARRIER FOR FIXED ROOF RAIL**
LASTTRÄGER FÜR FESTGELEGTE DACHSCHIENE
PORTE-CHARGE POUR RAIL DE TOIT FIXE

(30) Priority: 01.06.2005 SE 0501258
(43) Date of publication of application: 05.03.2008
(73) Proprietor: Thule Sweden AB, 330 33 Hillerstorp (SE)
(72) Inventor: LINDELL, Morgan, S-331 35 Värnamo (SE)
(86) International application number: PCT/SE2006/000628
(87) International publication number: WO 2006/130079

(56) References cited:
- WO-A1-94/21490
- WO-A1-96/24509
- WO-A1-97/11864
- SE-C2- 522 739

## Description

### Technical area

The present invention refers to a load carrier for a fixed roof rail of a vehicle, comprising a load carrier bar with one in each end arranged load carrier foot, for fastening of the load carrier at two essentially parallel roof rails, each comprising at least two movable clamping jaws arranged, at respectively load carrier foot, with an initial distance between each other which is larger than the width of the roof rails, whereby the load carrier essentially freely may be placed on the roof rails with the movable clamping jaws arranged on an opposite inside and outside of respectively roof rail, and cooperating with a clamping means, which is arranged to move the movable clamping jaws against each other in such way that the load carrier foot being firmly clamped at respectively roof rail.

### State of the art

A load carrier of introductory described kind is previously known by example through EP0689510, which disclose wedge-shaped clamping jaws, which by aid of a clamping means being moved against each other for clamping around a roof rail. The previously known clamping jaws are initially freely movable along the load carrier bar and consequently it may be difficult for the user to get these in right position in relation to the roof rails at assembly of the load carrier. In connection with modern roof rails, so called "flush rails", which are relatively low and lying close to the roof of the vehicle it may be difficult to get sufficient height on the camping jaws, such that the load carrier bar pass freely from the arched roof of the vehicle, and to get sufficient clamping force, since the clamping is performed in the upper part of the clamping jaws. Furthermore, it is costly to adopt the clamping jaws to a specific profile of the roof rail.

### Problem

The problem with a load carrier of the known kind is that it may be difficult to adjust the load carrier, in such way that the load carrier foot, at each end of the load carrier bar, grasp around respective roof rail.

### Solution

The purpose with the present invention is to simplify correct placing of the load carrier in an angle against the roof rail of the vehicle and the possibility to adopt the clamping jaws at low cost to different profiles of the roof rails, and to increase the strength of the fastening without crushing the rail.

The present invention overcomes the above mentioned disadvantages with a load carrier of the introductory mentioned kind which is characterized in that a fixed body arranged between the movable clamping jaws, which rests against said roof rail at assembly and against which fixed body at least one of the movable clamping jaws being moved to abutment at operation of said clamping means, whereby at least a guiding shoulder of either said clamping jaw or said body is arranged to be guided into a recess of either the body or the clamping jaw during assembly, to lock the clamping jaw and the body relatively each other at clamping of the clamping means.

### Brief description of the figures

A load carrier foot according to the present invention shall hereafter be described with reference to the enclosed figures, in which:
Figure 1 is a schematic perspective view of a load carrier foot according to the present invention.
Figure 2 is a schematic cross section view of the load carrier foot in an open position.
Figure 3 is a schematic cross section view of the load carrier foot in a closed position.

### Preferred embodiment

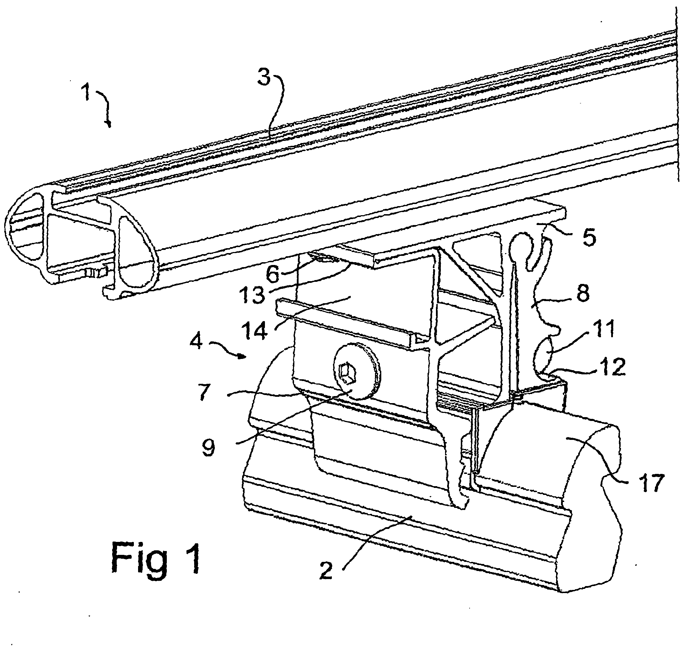

The load carrier 1, shown in figure 1 to 3, is intended to be mounted at a fixed roof rail 2 of a vehicle (not shown). In the figures, only one end of a load carrier 1 being shown, and to clearly illustrate the invention, it is shown without any covering casing. The load carrier 1 comprises a load carrier bar 3, which extends across the roof of the vehicle between two roof rails firmly arranged along with the roof of the vehicle, with one in each end arranged load carrier foot 4, for fastening the load carrier 1 at two essential parallel roof rails 2. Naturally, the load carrier bar 3 may have an optional cross section, as an example a square profile or an oval profile.

The load carrier foot 4 comprises a body 5, preferably of metal, which is fasten at the load carrier bar 3, with a bolt 6 or another clamping means. The body 5 is movable along the load carrier bar 3 and fixable in right position in relation to the essential parallel rails 2. Two movable clamping jaws 7 and 8 are arranged at the body 5 on the opposite inside and outside of the roof rail 2 and cooperating with a clamping means 9, which is arranged to move the movable clamping jaws 7 and 8 against the fixed body 5, whereby the load carrier foot 4 being firmly clamped at the roof rail 2.

The movable clamping jaws 7 and 8 are pivotally fasten at the load carrier foot 4 and in a first initial assembly position arranged in such way that the distance between the movable clamping jaws 7 and 8 is larger than the width of the roof rails. The fixation is preferably arranged in the upper part of the load carrier foot.

The clamping means 9 comprises, in the embodiment shown, a bolt 10, which extends through an opening in the clamping jaw 7 and the body 5 to a threaded hole in an axle 11, which is located in a groove 12 in the movable clamping jaw 8. At clamping of the bolt 10, the axle 11 and the movable clamping jaws 7 and 8 are moved in direction against the fixed body 5. The clamping means 9 is preferably arranged in the lower part of the load carrier foot, whereby the clamping force acting close to the roof rail.

To facilitate the assembly of the load carrier 1 at least one of the movable clamping jaws is part of an extruded profile of aluminium and being integrated with the body 5, which part comprises at least one upper leg 13, a body 14 and the lower clamping jaw 7. The upper leg 13 is rolled to abutment against the upper portion of the body, whereby the body 14 forms an elastic portion for the clamping jaw 7. The clamping jaw 7 is in an unloaded condition in its open position and at clamping of the bolt 10 the clamping jaw 7 being moved to abutment against the roof rail 2. Either at least one guiding shoulder 15 of said clamping jaw 7 or said body 5 is arranged to be guided during assembly into a recess 16 of either the body or the clamping jaw for locking the clamping jaw 7 and the body 5 relatively each other at clamping of the clamping means 9. Furthermore, a protruding beam 20 is provided, which limit the motion of the clamping jaws against the body 5. When the bolt 10 is loosened, the clamping jaw will spring back to its open position.

By making the body 5, and at least one clamping jaw 7, in a continuous aluminium profile through extrusion is it possible to simply modifying the profile to a specific designed roof rail and relatively simple adjustment of the height of the load carrier foot.

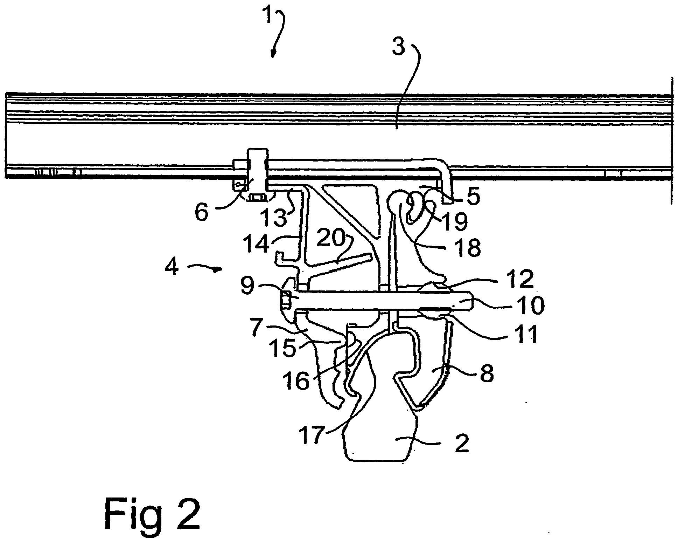

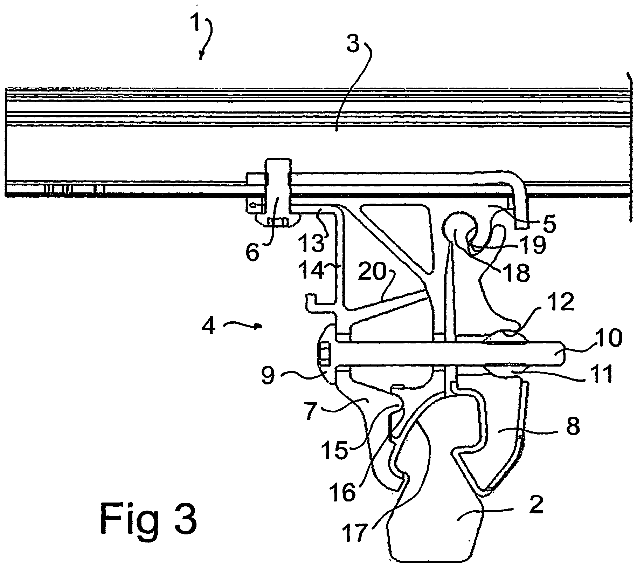

The invention will now be explained closer with reference to figure 2 and 3, which describe different moments during assembly of the load carrier to the roof rail. At the assembly the load carrier 1 is held above and perpendicular against the roof rail 2. The fixed body is directed against the roof rail 2, whereupon it is lowered to abutment against the upper portion 17 of the rail. In said first assembling position, the distance between the movable clamping jaws 7 and 8 is thus larger than the width of the roof rail.

The load carrier foot 4 is thus clamped firmly at the roof rail 2 by the fixed body 5 and the movable clamping jaws 7 and 8, which are placed on opposite sides of the roof rail 2. In the clamped position the guiding shoulder 15 is in engagement with the body 5 and secure the clamping jaw 7 in right position relatively the body 5, which essential reduce the risk for the load carrier to loosen from the rail.

Through the present invention, it is easy to adjust the distance between the load carrier feet to a present distance between the rails. The essential with the invention is thus that the movable clamping jaws 7 and 8 pass unobstructed of the roof rail 2 at assembly, and during fastening being turned into engagement with the roof rail 2.

To admit a larger turning of the clamping jaw 8 it is designed as a loose part, which having a cylindrical upper beam 18. The beam 18 is arranged in a corresponding groove 19 in the upper portion of the body 5. Even if the movable clamping jaws 7 and 8, in the shown embodiment, are designed in different ways, it is, naturally, possible that they are designed in a similar way. In addition, the clamping jaw 8 is preferable in the shape of an extruded profile of aluminium.

## Claims

1. Load carrier (1) for a fixed roof rail (2) of a vehicle, comprising a load carrier bar (3) with one in each end arranged load carrier foot (4), for fastening of the load carrier at two essentially parallel roof rails, comprising two movable clamping jaws (7, 8) arranged with an initial distance between each other which is larger than the width of the roof rails, whereby the load carrier essentially freely may be placed on the roof rails with the movable clamping jaws arranged on an opposite inside and outside of respective roof rail and cooperating with a clamping means (9), which is arranged to move the movable clamping jaws against each other in such way that the load carrier foot being firmly clamped at respective roof rail, **CHARACTERISED in that** a fixed body (5) is arranged between the movable clamping jaws (7, 8), which rest against said roof rail at assembly, and against which fixed body at least one of the movable clamping jaws being moved to abutment at operating of said clamping means (9), whereby at least a guiding shoulder (15) of either said clamping jaw or said body is arranged to be guided into a recess (16) of either the body or the clamping jaw, during assembly, to lock the clamping jaw and the body relatively each other at clamping of the clamping means (9).

2. Load carrier according to claim 1, **CHARACTERISED in that** the movable clamping jaws (7, 8) are pivotally journalled in an upper portion of the body (5) of the load carrier foot (4).

3. Load carrier according to claim 1 or 2, **CHARACTERISED in that** the at least the one of the movable camping jaws is part of an extruded profile of aluminium, comprising at least said body (5).

4. Load carrier according to claim 3, **CHARACTERISED in that** the body (5) is movable along the load carrier bar (3) and fixable in right position in relation to the essentially parallel rails (2).

5. Load carrier according any of the claims 2 to 4, **CHARACTERISED in that** the clamping means (9) runs in a groove through the lower portion of the body (5).

## Patentansprüche

1. Lastträger (1) für eine festgelegte Dachschiene (2) eines Fahrzeugs, mit einer Lastträgerstange (3) mit einem in jedem Ende angeordneten Lastträgerfuß (4) zur Befestigung des Lastträgers an zwei im Wesentlichen parallelen Dachschienen, mit zwei beweglichen Klemmbacken (7, 8), die anfänglich in einem Abstand voneinander angeordnet sind, der größer als die Breite der Dachschienen ist, wodurch der Lastträger im Wesentlichen frei auf den Dachschienen platziert werden kann, wobei die beweglichen Klemmbacken sich gegenüberliegend innen und außen an der jeweiligen Dachschiene angeordnet sind und mit einem Klemmmittel (9) zusammenwirken, das so angeordnet ist, dass es die beweglichen Klemmbacken so aufeinander zu bewegt, dass der Lastträgerfuß an der jeweiligen Dachschiene festgeklemmt ist, **dadurch gekennzeichnet, dass** ein festgelegter Körper (5) zwischen den beweglichen Klemmbacken (7, 8) angeordnet ist, der im montierten Zustand an der Dachschiene ruht und gegen den mindestens eine der beweglichen Klemmbacken zum Anschlagen bewegt wird, wenn das Klemmmittel (9) betätigt wird, wodurch mindestens eine Führungsschulter (15) der Klemmbacke oder des Körpers so angeordnet ist, dass sie während der Montage in eine Aussparung (16) des Körpers oder der Klemmbacke geführt wird, um die Klemmbacke und den Körper beim Klemmen des Klemmmittels (9) bezüglich einander zu verriegeln.

2. Lastträger nach Anspruch 1, **dadurch gekennzeichnet, dass** die schwenkbaren Klemmbacken (7, 8) schwenkbar in einem oberen Abschnitt des Körpers (5) des Lastträgerfußes (4) gelagert sind.

3. Lastträger nach Anspruch 1 oder 2, **dadurch gekennzeichnet, dass** mindestens eine der beweglichen Klemmbacken Teil eines extrudierten Aluminiumprofils ist, das mindestens den Körper (5) umfasst.

4. Lastträger nach Anspruch 3, **dadurch gekennzeichnet, dass** der Körper (5) entlang der Lastträgerstange (3) bewegbar und in der richtigen Position bezüglich der im Wesentlichen parallelen Schienen (2) festlegbar ist.

5. Lastträger nach einem der Ansprüche 2 bis 4, **dadurch gekennzeichnet, dass** das Klemmmittel (9) in einer Nut durch den unteren Abschnitt des Körpers (5) läuft.

## Revendications

1. Porte-charge (1) pour un rail de toit fixe (2) d'un véhicule, comprenant une barre de porte-charge (3) avec un pied de porte-charge (4) disposé à chaque extrémité, afin d'attacher le porte-charge à deux rails de toit essentiellement parallèles, comprenant deux mâchoires de serrage déplaçables (7, 8) disposées avec une distance initiale entre elles qui est supérieure à la largeur des rails de toit, le porte-charge pouvant être placé essentiellement librement sur les rails de toit, avec les mâchoires de serrage déplaçables disposées sur un intérieur et un extérieur opposés du rail de toit respectif et coopérant avec un moyen de serrage (9) qui est disposé de manière à déplacer les mâchoires de serrage déplaçables l'une contre l'autre de telle sorte que le pied de porte-charge soit fermement serré sur le rail de toit respectif, **caractérisé en ce qu'**un corps fixe (5) est disposé entre les mâchoires de serrage déplaçables (7, 8), qui reposent contre ledit rail de toit lors de l'assemblage, et au moins l'une des mâchoires de serrage déplaçables étant déplacée en butée contre ce corps fixe lors de l'actionnement dudit moyen de serrage (9), au moins un épaulement de guidage (15) soit de ladite mâchoire de serrage soit dudit corps étant disposé de manière à être guidé dans un évidement (16) soit du corps soit de la mâchoire de serrage, lors
de l'assemblage, afin de bloquer la mâchoire de serrage et le corps l'un par rapport à l'autre lors du serrage du moyen de serrage (9).

2. Porte-charge selon la revendication 1, **caractérisé en ce que** les mâchoires de serrage déplaçables (7, 8) sont tourillonnées de manière pivotante dans une partie supérieure du corps (5) du pied de porte-charge (4).

3. Porte-charge selon la revendication 1 ou 2, **caractérisé en ce qu'**au moins l'une des mâchoires de serrage déplaçables fait partie d'un profilé extrudé en aluminium, comprenant au moins ledit corps (5).

4. Porte-charge selon la revendication 3, **caractérisé en ce que** corps (5) est déplaçable le long de la barre de porte-charge (3) et peut être fixé dans la position correcte par rapport aux rails (2) essentiellement parallèles.

5. Porte-charge selon l'une quelconque des revendications 2 à 4, **caractérisé en ce que** le moyen de serrage (9) passe dans une rainure à travers la partie inférieure du corps (5).
